# EUROPEAN PATENT SPECIFICATION

(11) **EP 2 469 866 B1**
(45) Date of publication and mention of the grant of the patent: **16.01.2019**
(21) Application number: 11188952.3
(22) Date of filing: 14.11.2011
(51) Int. Cl.: H04N 13/128

(54) **Information processing apparatus, information processing method, and program**
Informationsverarbeitungsvorrichtung, Informationsverarbeitungsverfahren und Programm
Appareil de traitement d'informations, procédé et programme de traitement d'informations

(30) Priority: 21.12.2010 JP 2010284583
(43) Date of publication of application: 27.06.2012
(73) Proprietor: Sony Corporation, Tokyo 108-0075 (JP)
(72) Inventor: Narita, Tomoya, Minato-ku, Tokyo 108-0075 (JP); Takaoka, Lyo, Minato-ku, Tokyo 108-0075 (JP); Okada, Kenichi, Minato-ku, Tokyo 108-0075 (JP); Kasahara, Shunichi, Minato-ku, Tokyo 108-0075 (JP); Kano, Ritsuko, Minato-ku, Tokyo 108-0075 (JP)
(74) Representative: MFG Patentanwälte Meyer-Wildhagen Meggle-Freund Gerhard PartG mbB

(56) References cited:
- EP-A2- 0 816 983
- EP-A2- 2 106 152
- EP-A2- 2 107 816
- JIN LIU ET AL: "Three-dimensional PC: toward novel forms of human-computer interaction", PROCEEDINGS OF THREE-DIMENSIONAL VIDEO AND DISPLAY: DEVICES AND SYSTEMS SPIE CR76, 2 February 2001 (2001-02-02), pages 250-281, XP055097918,

## Description

The present disclosure relates to an information processing apparatus, an information processing method, and a program. Preferably, embodiments relate to an information processing apparatus, an information processing method, and a program that are configured to control the display of objects of a user's interest.

Recently, stereoscopic display technologies for three-dimensionally displaying content in a virtual three-dimensional space have been gaining popularity (refer to Japanese Patent Laid-open No. Hei 08-116556 below, for example). In the case of displaying an object in a virtual three-dimensional space, the adjustment in parallax amounts between an image for the right eye and an image for the left eye for presenting an object on a stereoscopic display for the left and the right eye of a viewer allows the presentation of the object at any distance in the depth direction from an extremely close range before the eyes of the viewer to an infinite direction.

However, when a person looks at a stereoscopic display, increasing the parallax of an object displayed on the display too much takes long for the person to focus the eyes on the object, thereby causing a problem of straining the eyes to lead to eye fatigue. In order to overcome this problem, a method is proposed in which a range of the projection and retracting amounts of an object is restricted, thereby mitigating the eye fatigue and the sense of unnaturalness.

Especially, in a situation where, as with small-size displays designed for portable devices, an object is stereoscopically displayed at an arm's length for example, viewing distance is extremely short, the above-mentioned problem therefore presents itself more conspicuously, thereby making it difficult to stereoscopically present the object beyond several centimeters from the front and back of the display. In order to circumvent this problem, a method is proposed in which the parallax amount of an image is decreased more especially in small-size displays than in large-size displays with long viewing distance, thereby mitigating the eye fatigue and the sense of unnaturalness.

Generally, the retracting presentation from the screen, rather than the projecting presentation from the screen, is advantageous in the mitigation of the eye fatigue and the sense of unnaturalness and does not strain the eyes of the viewer, thereby providing comfortable browsing of stereoscopically expressed objects. Hence, a method is proposed in which a retracting amount is set higher than a projection amount to execute stereoscopic display that provides the sense of depth.

However, while the eye fatigue can be mitigated by decreasing the projection amount or retracting amount of an object, stereoscopic effects are reduced, thereby lacking the sense of realism or an impact. Therefore, the development of technologies has been desired for widening the range of the projection amount and retracting amount of an object by developing a new method of facilitating for each viewer to set the focus of the eyes on a desired object, thereby providing the presentation having the sense of realism and an impact.

Therefore, the present disclosure has been made in order to solve the problems described above. It is desirable to provide a new and improved information processing apparatus, an information processing method, and a program that are configured, in accordance with the attention of a user to a particular object, to execute animation display of this particular object in the depth direction.

Jin Liu et al "Three-dimensional PC: toward novel forms of human-computer interaction", Proceedings of three-dimensional Video and Display: Devices and Systems Spie CR76, 2 February 2001 (2001-02-02) describes a prior art device in which a 3D operating system is described. Other prior art exists in EP 2,107,816A, EP 0,816,983A and EP 2,106,152A.

In carrying out the disclosure and according to one embodiment thereof, there is provided an information processing apparatus according to Claim 1.

In carrying out the disclosure and according to one embodiment thereof, there is provided an information processing method according to Claim 9.

In carrying out the disclosure and according to one embodiment thereof, there is provided a program according to Claim 10.

As described above and according to the invention, in response to user's attention to a particular object, said particular object can be animation-displayed in the depth direction.

Various respective aspects and features of the invention are defined in the appended claims. Combinations of features from the dependent claims may be combined with features of the independent claims as appropriate and as explicitly set out in the claims.

Embodiments of the invention will now be described with reference to the accompanying drawings, throughout which like parts are referred to by like references, and in which:
FIG. 1 is a schematic diagram illustrating an outline configuration of an information processing apparatus according to one embodiment of the disclosure;
FIG. 2 is a block diagram illustrating a functional configuration of the information processing apparatus according to the embodiment;
FIG. 3 is a flowchart indicative of animation display processing to be executed by the information processing apparatus according to the embodiment;
FIG. 4 is an example of animation display in the depth direction according to the embodiment;
FIG. 5 is an example of animation display based on the left and right parallax representation according to the embodiment;
FIG. 6 is a diagram indicative of a relation between a parallax reduced/enlarged animation display time and a parallax amount according to the embodiment (upper part of Fig. 6); and
FIG. 7 is an example of animation display in the case where screens have been switched therebetween by the information processing apparatus according to the embodiment.

The embodiment of the present disclosure will be described in further detail below with reference to the accompanying drawings. It should be noted that, in the present specification and drawings attached thereto, component elements having substantially the same functional configuration are denoted by the same reference numeral and the description of these component elements is omitted.

The description of the embodiment will be made in the following order:
(1-1) A configuration of an information processing apparatus;
(1-2) Operations of the information processing apparatus;
(1-3) Adjustment of parallax amounts;
(1-4) Switching between screens; and
(1-5) Variations

### (1-1) A configuration of an information processing apparatus

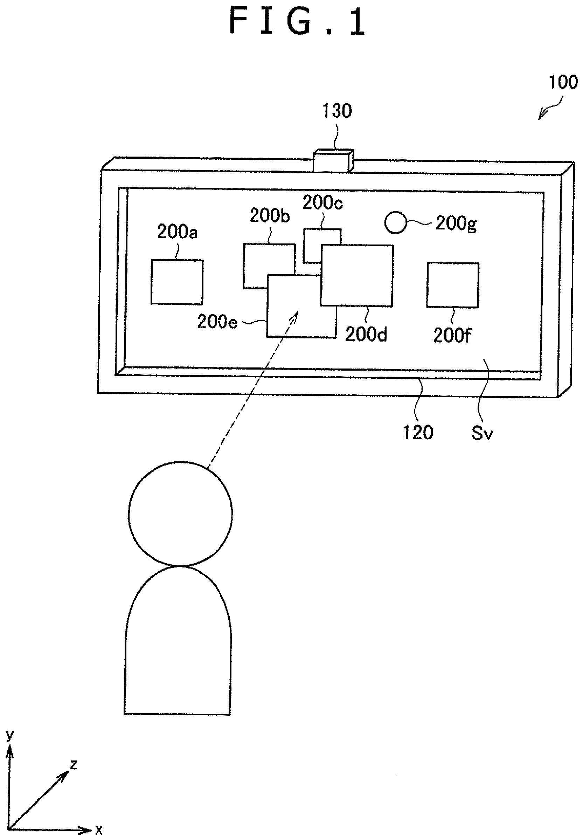

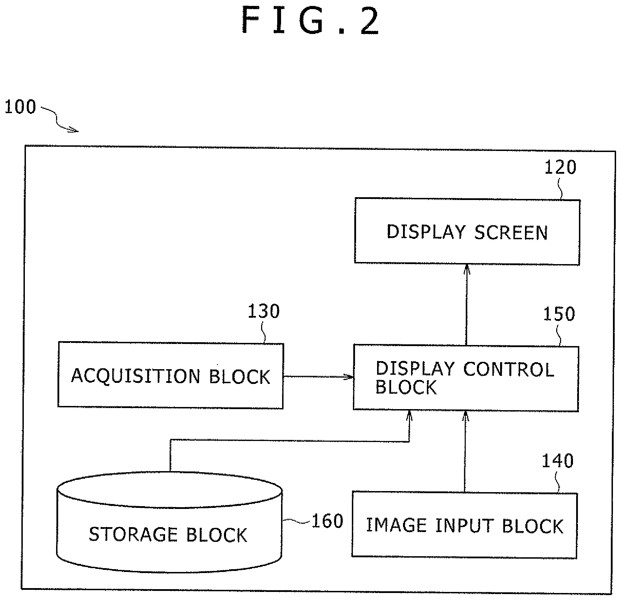

The following describes a configuration of an information processing apparatus according to one embodiment of the present disclosure with reference to FIG. 1 and FIG. 2. Referring to FIG. 1, there is shown an outline configuration of an information processing apparatus 100 according to a first embodiment of the disclosure. FIG. 2 shows a functional configuration of the information processing apparatus 100.

As shown in FIG. 1, the information processing apparatus 100 is a PC (Personal Computer), television receiver, a music player, a game machine, a mobile phone, or a portable terminal, for example, and has a display screen 120 and an acquisition block 130. The display screen 120 displays a virtual three-dimensional space Sv in which two or more objects 200a through 200g are arranged. The acquisition block 130 gets the results of the detection associated with the attention of a user to the objects displayed on the display screen 120.

The display screen 120 is a display device such as LCD (Liquid Crystal Display), PDP (Plasma Display Panel), or organic EL (ElectroLuminescence) panel, for example. The display screen 120 is a display capable of stereoscopic display. The display screen 120 executes stereoscopic display by a method in which a pair of polarized glasses for example is used to allow a viewer to see a view point image (or a parallax image) based on the polarized states different for the eyes of the viewer. Any other methods are available including one in which, without using a pair of polarized glasses, a predetermined view point image of two or more view point images is introduced into the eye balls of the viewer through a parallax barrier or a lenticular lens, and another that is known as frame sequential. It should be noted that, as shown in the figure, the display screen 120 may be unitized with the information processing apparatus 100, and arranged on the surface of the apparatus. Alternatively, the display screen 120 may be arranged independently of the information processing apparatus 100.

The virtual three-dimensional space Sv is displayed on the display screen 120. In the embodiment, three directions shown in the figure are defined in the virtual three-dimensional space Sv; the x-axis direction, the y-axis direction, and the z-axis direction. The x-axis direction is indicative of the left and right directions of the display screen 120. The y-axis direction is indicative of the up and down directions of the display screen 120. The z-axis direction is indicative of the depth direction of the display screen 120.

In the virtual three-dimensional space Sv, two or more objects 200a through 200g are displayed. The objects may include the point object 200g that is operated by the user and content objects 200a through 200f, for example. It should be noted that the animation display of objects in the embodiment will be described later.

The acquisition block 130 gets the results of the detection associated with the attention of the user to objects displayed on the screen. In FIG. 1, the acquisition block 130 gets the detection results of the attention of the user to the particular object 200e.

In order to get the detection results of user attention, the acquisition block 130 may have a camera or an infrared radiation emission block and an infrared radiation reception block, for example. In the embodiment, the acquisition block 130 having a camera is arranged on such a location that facilitates the detection of a viewer's face, such as the top of the information processing apparatus 100, for example.

### - Attention of user

In a method of detecting whether the user is paying attention to a particular object in the embodiment, face detection (or face recognition) is executed from the image data obtained by use of the camera of the acquisition block 130, thereby estimating whether the user is paying attention to a particular object by the presence or absence of the user's face.

Various other methods are available for methods of detecting whether the user is paying attention to a particular object. For example, the presence or absence of the user's face and the direction of the user's face may be detected by use of the above-mentioned face recognition technology, thereby estimating a particular object to which the user is paying attention on the basis of the detection. On the basis of the detection results of the direction of the user's face and the distance between the display screen 120 and the user's face, a particular object to which the user is paying attention can be estimated. By detecting that there are two or more eyes, a particular object to which the user is paying attention can be estimated.

By detecting a reflected light of infrared radiation from the retina of the user's eyes, the attention of the user may be estimated. A sensor, such as a camera, may be attached to the eyeglasses of the user to detect the distance and directional relation between the eyeglasses and the display screen 120, thereby estimating the attention of the user.

From an operational state of a user's device, the attention of the user may be estimated. Especially, if the information processing apparatus 100 is a mobile device, such as a mobile phone, a portable terminal, or a portable game machine, the attention of the user may be estimated on the basis of the state of an operation executed on the user's device or the directivity of sound emitted from the device. In addition, the attention of the user may be estimated by any other methods as long as objects to which the user is paying attention can be estimated on the basis of eye contact, sight line movement, sight line direction, presence or absence of the body, the direction of the body, the direction of the head, user's gesture, or brain signals, for example.

As described above, the detection results associated with user attention may include at least one or more of the presence or absence of the face, the direction of the face, the distance between the above-mentioned display screen and the face, two or more eyes, the infrared light reflected from the user's eyes, operation of the device, the directivity of the sound emitted from the device, brain signals, eye contact, sight line movement, sight line direction, the presence or absence of the body, the direction of the body, the direction of the head, and user's gesture.

The acquisition block 130 may be arranged at such a location easy to detect viewer's face as the top of the information processing apparatus 100 and in the orientation corresponding to the orientation of the display screen 120, as shown in FIG. 1, for example. In this case, the user can easily relate the direction in the virtual three-dimensional space Sv with the actual direction, thereby facilitating the animation display based on the results of the user's face detection obtained by the acquisition block 130.

The information processing apparatus 100 shown in FIG. 1 makes the acquisition block 130 get the detection results associated with the user's attention, and animation-displays a particular object to which the user is paying attention, on the basis of the obtained detection results. For example, if the user's attention departs from an object, the information processing apparatus 100 executes animation display operation in which the projection amount or the retracting amount of the object is gradually decreased. If the user's attention is directed to an object, the information processing apparatus 100 executes animation display operation in which the projection amount or the retracting amount of the object is gradually increased.

Referring to FIG. 2, there is shown a block diagram illustrating a functional configuration of the information processing apparatus 100 according to the embodiment of the disclosure. In FIG. 2, the information processing apparatus 100 has the display screen 120, the acquisition block 130, an image input block 140, a display control block 150, and a storage block 160. As described above, the information processing apparatus 100 may be a PC, a television receiver, or a mobile device, for example, but need not always include the above-mentioned component elements in the same housing as that of the information processing apparatus 100. For example, the display screen 120 may not be incorporated inside the information processing apparatus 100; namely, the display screen 120 may be arranged independently of the information processing apparatus 100. In addition, the storage block 160 may not be incorporated inside the information processing apparatus 100; the storage block 160 may be provided in function as a storage arranged on a network, for example. The display screen 120 and the acquisition block 130 are as described above with reference to FIG. 1, so that the description thereof is omitted.

The image input block 140 is used to enter an image to be displayed on the display screen 120. The display control block 150 adjusts a parallax amount in accordance with user's attention to a particular object. For example, if user's attention departs from a particular object, the display control block 150 accordingly decreases the parallax amount of the object. If user's attention is directed to a particular object, the display control block 150 accordingly increases the parallax amount of the object.

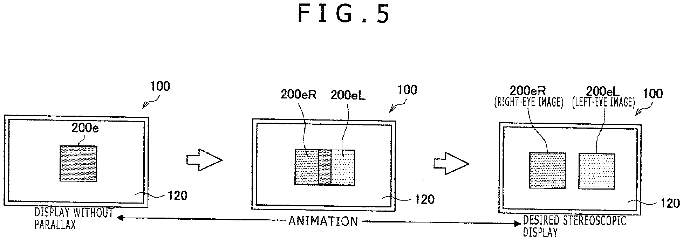

Methods of adjusting the parallax amount of a particular object include one that the parallax amount is adjusted by simply adjusting the depth amount of content to the depth direction (the Z direction), and another that the parallax (or the angle of convergence) is actually adjusted. For example, in order to realize animation display on the display based on binocular parallax, two or more intermediate parallax images having different parallax amounts (or offset amounts) of a right-eye image 200eR and a left-eye image 200eL in the form of supplementing the parallax amounts in the final states of the right-eye image 200eR and the left-eye image 200eL. Next, the intermediate parallax images are displayed (the center diagram of FIG. 5) so as to sequentially increase the parallax from the display state (the left diagram of FIG. 5) in which there is no parallax between the right-eye image 200eR and the left-eye image 200eL. Consequently, the parallax amount of each object can be adjusted.

The display control block 150 displays the objects 200a through 200g to be arranged in virtual three-dimensional space Sv onto the display screen 120 as stereoscopic images. On the basis of the adjustment of parallax amount, the display control block 150 animation-displays a particular object in the depth direction. To be more specific, as the user's attention departs from a particular object, the display control block 150 gradually decreases the parallax amount of the object accordingly. Consequently, the display control block 150 can animation-display the particular object so as to decrease the depth amount of the object. When user's attention is directed to a particular object, the display control block 150 gradually increases the parallax amount of the object accordingly. Consequently, the display control block 150 can animation-display the particular object so as to increase the depth amount of the object.

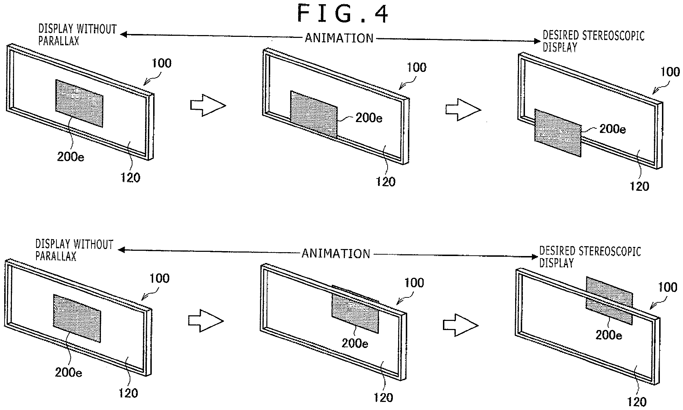

The following describes animation display with reference to FIG. 4 and FIG. 5. The upper part of FIG. 4 shows an example of animation display in which an object 200e is represented as projected in the depth direction. The lower part of FIG. 4 shows an example of animation display in which the object 200e is represented as retracted in the depth direction. FIG. 5 shows the animation display in the depth direction in the degree of the parallax (or the offset) between the right-eye image 200eR and the left-eye image 200eL as described above.

For example, the left diagrams of FIG. 4 and FIG. 5 show normal screen display states in which no stereoscopic display is executed, namely, the display states in which the parallax amount between the right-eye image 200eR and the left-eye image 200eL is 0. At this time, the object 200e is two-dimensionally displayed in which there is no parallax on the display screen 120. From this display state, the parallax amount (or the offset amount) between the right-eye image 200eR and the left-eye image 200eL is gradually increased as shown at the center of FIG. 5. Consequently, the animation display in the depth direction shown at the center of FIG. 4 is executed, thereby moving the object to a target stereoscopic display location shown in the right diagram of FIG. 4. In the right diagram of FIG. 5, the right-eye image 200eR is located to the left of the left-eye image 200eL, so that, as shown in the upper right of FIG. 4, the object 200e looks as projected in the target stereoscopic display. On the other hand, if, contrary to the right diagram of FIG. 5, the right-eye image 200eR is located to the right of the left-eye image 200eL, the object 200e looks as retracted in the target stereoscopic display as shown in the lower right of FIG. 4.

Accordingly, an object is gradually moved in the depth direction to a location at which the object is actually displayed, so that the user can easily stepwise adjust the eye focus to make the eye focus follow the object. Consequently, as compared with the case where animation display is not executed, the range of depth amounts can be widened, thereby realizing realistic stereoscopic display. It should be noted that the depth amount of an object denotes an amount of projection forward from the display screen 120 or an amount of retraction backward from the display screen 120.

In FIG. 4 and FIG. 5, animation display is executed in the direction in which an object's projection representation or retraction representation is enlarged by gradually increasing the absolute value of the parallax amount of objects from 0. This is referred to herein as parallax enlarged animation display. On the other hand, animation display may be sometimes executed from right to left by inverting the arrows shown in FIG. 4 and FIG. 5. In this case, the absolute value of the parallax amount of objects is gradually reduced from the value of realizing target stereoscopic display, thereby executing animation display in the direction in which object's projection representation or retraction representation is decreased. This is referred to herein as parallax reduced animation display.

The display control block 150 is a computation processing apparatus for executing display operations and can be realized by a GPU (Graphics Processing Unit), a CPU (Central Processing Unit), or a DSP (Digital Signal Processor), for example. The display control block 150 may operate as instructed by programs stored in the storage block 160.

It should be noted that programs that realize the functions of the display control block 150 may be provided to the information processing apparatus 100 as stored in a removable storage medium, such as a disc recording medium or a memory card, or the programs may be downloaded to the information processing apparatus 100 through a LAN (Local Area Network), the Internet, or other networks, for example.

The storage block 160 stores data necessary for the processing to be executed by the information processing apparatus 100. In this first embodiment, the storage block 160 also stores a first predetermined time and a second predetermined time that are predetermined as the threshold values for animation display. The storage block 160 may be a storage apparatus, such as a RAM (Random Access Memory) or a ROM (Read Only Memory) . Alternatively, the storage block 160 may be a removable storage medium, such as an optical disc, a magnetic disc, or a semiconductor memory, and may be a combination of a storage apparatus and a removable storage medium. The storage block 160 may store programs for realizing the functions of the display control block 150, for example by making the CPU or the DSP execute these functions.

### (1-2) Operations of the information processing apparatus

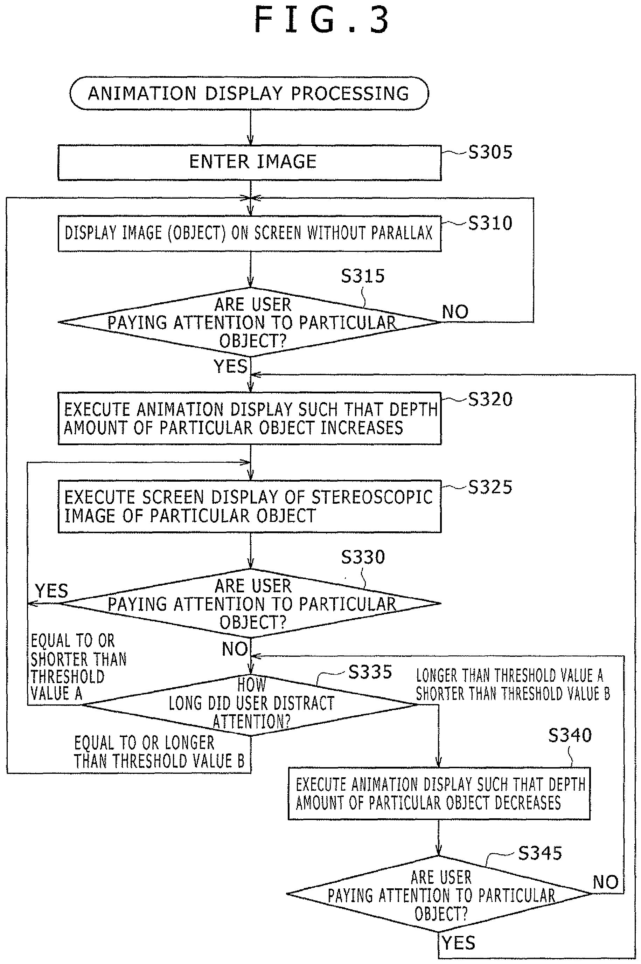

The following describes animation display processing according to the embodiment of the disclosure with reference to FIG. 3. The animation display processing according to the embodiment of the disclosure executes animation display from a location where a parallax amount is small up to a location where stereoscopic display is actually executed, at the time of screen transition at presenting an input image and the start of browsing of the input image.

First, in step S305, the image input block 140 enters an image that includes two or more objects 200a through 200g. In step S310, the display control block 150 two-dimensionally displays the input image on the display screen 120 in a state where there is no parallax. In step S315, the acquisition block 130 gets detection results associated with user attention to a particular object. The display control block 150 determines the user's attention to a particular object. If the user is found not paying attention to a particular object, then the procedure returns to step S310 to repeat step S310 and step S315 until the user pays attention to a particular object.

If the user is found paying attention to a particular object, then the procedure goes to step S320, in which the display control block 150 animation-displays the particular object to which the user is paying attention such that the depth amount of this object is enlarged (the parallax enlarged animation display).

Consequently, the sign plus or minus attached to a parallax amount to be adjusted indicates that the object 200e gradually projects forward from the display screen 120 from a display state in which there is no parallax, and is animation-displayed up to a target stereoscopic display location as shown in the upper part of FIG. 4. Alternatively, as shown in the lower part of FIG. 4, the object 200e is gradually retracted behind the display screen 120 from a display state in which there is no parallax and animation-displayed up to a target stereoscopic display location.

Next, in step S325, the display control block 150 displays the stereoscopic image of the particular object at a target stereoscopic display location. In step S330, the display control block 150 determines whether the user is paying attention to the particular object. If the user is found paying attention to the particular object, then the procedure returns to step S325 to repeat step S325 and step S330 to display the stereoscopic image of the particular object at the target stereoscopic display location until the user averts the eyes from the particular object.

If the user is found to have averted the eyes from the particular object, then the procedure goes to step S335, in which the display control block 150 determines how long the user has averted the eyes. If this averted time is found to be equal to or longer than the predetermined threshold value A (equivalent to the first predetermined time) of the eye averted time, then the procedure returns to step S325, in which the display control block 150 displays the stereoscopic image of the particular object at the target stereoscopic display location, step S325 through step S335 are repeated until the eye averted time gets longer than the threshold value A.

If the eye averted time gets longer than the predetermined threshold value A, then the procedure goes to step S340, in which the display control block 150 animation-displays the particular object such that the depth amount of the particular object is reduced (the parallax reduced animation display). Next, in step S345, the display control block 150 determines whether the user is paying attention to the particular object. If the user is found paying attention to the particular object, then the procedure returns to step S320, in which the display control block 150 animation-displays the particular object such that the depth amount of the particular object is enlarged. Then, the display control block 150 executes the processing of steps S325 onward again.

If the user is found not paying attention to the particular object in step S345, then the procedure returns to step S335, in which the display control block 150 continues the parallax reduced animation display in a duration longer than threshold value A of averted eye time and shorter than a threshold value B (equivalent to the second predetermined time); if the eye averted time gets equal to or longer than the threshold value B in step S335, then the procedure goes to step S310, in which the display control block 150 displays the image of the particular object on the display screen 120 in the state in which there is no parallax. Then, the display control block 150 executes the processing of steps S315 onward again.

According to the processing described above, an object is gradually moved in the direction of depth by animation display, so that the user can gradually adjust the eye focus in accordance with the animation display, thereby making the eye focus follow the object. Therefore, as compared with the case where animation display is not executed, the range of object's projection amount and retracting amount can be widened to execute stereoscopic display that is realistic and powerful.

If the duration in which the user averts eyes from the particular object is equal to or shorter than the threshold value A, then the procedure returns to step S325, in which the stereoscopic image of the particular object is displayed on the screen. This is because the user can easily focus on a stereoscopically displayed object without starting animation display after a very short eye averted time. If animation display is started after a very short eye averted time, display switching occurs frequently even when the user returns the eyes to that object immediately after the very short eye averted time, thereby complicating the processing.

If the eye averted time is longer than the threshold value A and shorter than the threshold value B, the parallax reduced animation display is executed in step S340 as described above. This is because the object is gradually moved from the target stereoscopic display location in the direction in which the depth amount is reduced by animation display, so that, if the user returns the eyes to the object, the user can easily adjust the eye focus in accordance with the animation display.

If the eye averted time is equal to or longer than the threshold value B, the procedure returns to step S310 to display the image (or the object) on the screen in the state in which there is no parallax. This is because, if the user averts the eyes from the object for long, displaying the object without parallax most removes the fatigue from the user's eyes, thereby providing comfortable browsing.

In step S320, the display control block 150 executes the parallax enlarged animation display and then displays the stereoscopic image of the object onto the screen in step S325. This is because connecting the object in animation display from the displaying of the object on the screen without parallax to the target stereoscopic display location reduces unnaturalness of display so that the user can easily view the display, thereby minimizing the eye fatigue of the user.

It should be noted that, in step S335, a method of displaying the image onto the screen is determined on the basis of the length of the eye averted time. However, in step S335, this display may be controlled on the basis of the parallax amount of the object instead of the length of eye averted time. For example, in the case of image content having a large parallax amount, such as an excessively projecting object or an excessively retracting object, after averting the eyes for a while, then the procedure returns to step S310, in which the image content may be displayed on the screen without parallax. If the parallax amount is small, after averting the eyes for a while, then the procedure returns to step S325, in which the stereoscopic display may be continued without changing parallaxes. If the parallax amount is neither large nor small, the procedure may go to step S340 to execute the parallax reduced animation display. It should be noted that the condition of averting the eyes for while and the condition that the parallax amount is neither large nor small may be predetermined and the values of these conditions may be stored in the storage block 160 in advance.

### (1-3) Adjustment of parallax amounts

As described above, the display control block 150 adjusts the parallax amount of a particular object in accordance with user's attention on the basis of detection results acquired by the acquisition block 130 and animation-displays the object corresponding to the adjusted parallax amount.

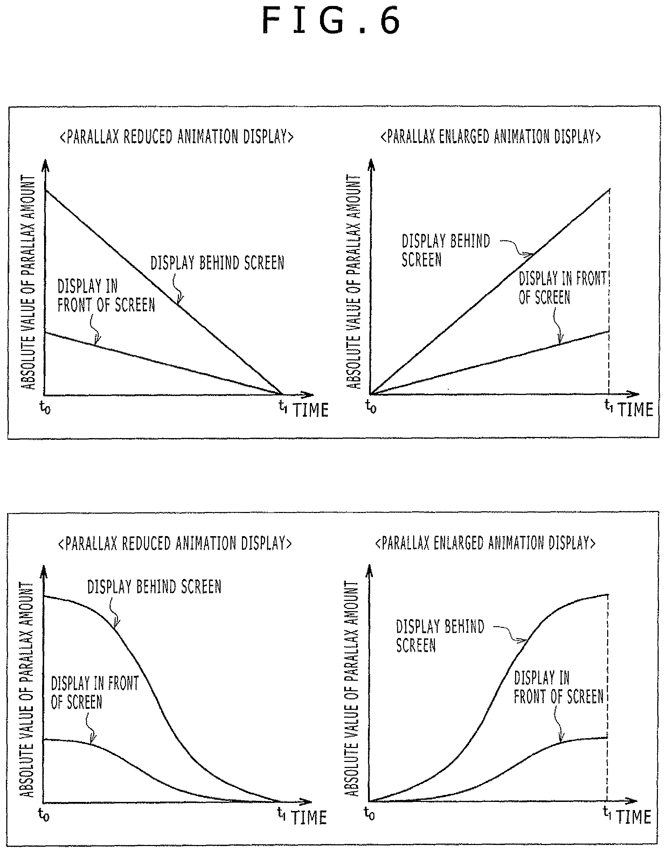

At this time, the display control block 150 can adjust the parallax amount of an object in a linear or nonlinear manner. The adjustment of the parallax amount of an object in a nonlinear manner is provided for explanatory purposes only, and this example is useful for understanding the invention. Consequently, the speed of animation display can be controlled. For example, the graph shown in the upper part of FIG. 6 is indicative of an example in which the parallax amount of an object is adjusted in a linear manner and the lower part of FIG. 6 is indicative of an example in which the parallax of an object is adjusted in a nonlinear manner.

The graph in the upper left shows a method of executing adjustment to linearly reduce the absolute value of a parallax amount during time from the starting of animation display to the ending thereof. According to this method, the parallax reduced animation display is executed for gradually reducing object projecting representation or retracting representation. In order to mitigate user's fatigue and the sense of unnaturalness, the retracting representation into the depth from the display screen 120 is generally easier than the projecting representation from the display screen 120 for the user's eyes to browse the screen. Hence, in each graph shown in FIG. 6, the absolute value of a parallax amount in the retracting representation from the display screen 120 is greater than the absolute value of a parallax amount in the projecting representation from the display screen 120. It should be noted that, regardless of displaying an object in the projecting or retracting manner, the time from animation start time t₀ to animation end time t₁ remains the same. Therefore, the speed of the animation display executed behind the display screen 120 is greater than the speed of the animation display executed in front of the display screen 120.

The graph in the upper right is indicative of a method of linearly increasing the absolute value of a parallax amount. According to this method, the parallax enlarged animation display is executed for gradually enlarging object's projecting representation or retracting representation. In this case too, the speed of animation display to be executed behind the display screen 120 is greater than the speed of animation display to be executed in front of the display screen 120.

On the other hand, the graph in the lower left executes adjustment such that the absolute value of a parallax amount gets linearly small during the time from the start and end of animation display. This adjustment allows the execution of the parallax reduced animation display in which the object projecting or retracting speed changes temporally. As described above, the retracting representation into the depth from the display screen 120 is generally easier than the projecting representation from the display screen 120 for the user's eyes to browse the screen. In addition, at animation start time t₀ and end time t₁ and in time zones in the vicinity thereof, it is harder for the human eyes to follow an object than in a time zone therebetween. In consideration of this parallax state of the user, the graph in the lower left decreases the variable of the parallax amounts at animation start time t₀ and end time t₁ and in the time zones in the vicinity thereof as compared with the variable in other time zones, thereby executing animation display slowly at the animation start time and end time.

Likewise, the graph in the lower right linearly adjusts the absolute value of a parallax amount to a great degree. According to this method, the parallax enlarged animation display in which the speed of object projection or retraction is varied can be executed. In this case too, the changing speed of animation display is lower at the start and end thereof than halfway in therebetween, so that the load on the user's eyes is mitigated to make easier for the user's eyes to follow the object. Hence, the range of the depth amount of an object can be further widened, thereby realizing the stereoscopic display that is more real and powerful.

### (1-4) Switching between screens

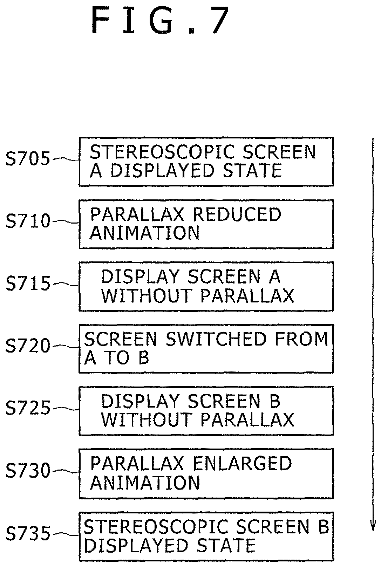

The animation display method described above (with reference to FIG. 3) is especially advantageous in letting the user's eyes recognize the difference sense of distance at the time of screen switching from the display of one stereoscopic image to the display of another stereoscopic image, such as the input of still image B after still image A or the changing of scenes of moving images, for example. Referring to FIG. 7, there is shown a simplified operation of screen switching. The operation steps shown are executed from up to down.

For example, step S705 shows a state in which an input image is stereoscopically represented (a stereoscopic screen A displayed state). This is equivalent to step S325 shown in FIG. 3. Next, when the user's eyes depart from the stereoscopically represented image, the parallax reduced animation display is executed in step S710. This is equivalent to step S340 (step S330 through step S345) shown in FIG. 3. After the passing of the second predetermined time, screen A of the input image is displayed without parallax in step S715. This is equivalent to step S310 (step S335 through step S310) shown in FIG. 3.

In step S720, when a new image is entered for example, screen A is switched to screen B. In step S725, the image of screen B switched is displayed without parallax. This is equivalent to step S305 and step S310 shown in FIG. 3. Next, in step S730, the parallax enlarged animation display is executed. This is equivalent to step S320 shown in FIG. 3. After the passing of a predetermined time, screen B of the input image is stereoscopically displayed in step S735. This is equivalent to step S325 shown in FIG. 3.

As described above, when executing stereoscopic display for each of the images that are displayed by switching the screens, an intermediate image that is not the target stereoscopic display for each image is displayed in the process of display up to the target stereoscopic display. As a result, each image can be smoothly transitioned from the non-stereoscopic display easy for the eyes to the target stereoscopic display in the form of animation, thereby mitigating the load on the user's eyes when the user see stereoscopic display screens.

As described above, according to the information processing apparatus 100 according to the embodiment of the disclosure, in response to the user's attention to a particular object, the object is animation-displayed in the depth direction. This configuration widens the range of object's projecting amount and retracting amount, thereby executing stereoscopic display that is realistic and powerful.

Especially, in a situation where an object is stereoscopically displayed at an arm's length distance for example on small-sized displays installed on portable devices, the viewing distance is very short, so that the load on user's eyes is very high, thereby increasing eye fatigue as compared with the case of large-sized displays. Therefore, attempting to present an object beyond several centimeters from the front and back of the display makes it difficult to provide stereoscopic display. However, according to the animation display in the depth direction according to the present embodiment, the range of object's projecting amount and retracting amount can be widened while mitigating the eye fatigue and the sense of unnaturalness even on small-sized displays, thereby executing stereoscopic display that is more realistic and powerful.

### (1-5) Variation

The animation display to be executed by the information processing apparatus 100 is applicable to other uses. A variation in the present embodiment is described as one of the examples, in which animation display is used when changing image display methods between a normal view area in which stereoscopic viewing can be done and a reverse view area in which stereoscopic viewing is difficult.

First, it is determined whether an area is viewable from a user's viewing location. For example, a user's viewing location is detected by use of camera or the like and a result of the detection is transmitted to the acquisition block 130. On the basis of the detection result obtained by the acquisition block 130, the display control block 150 animation-displays an image in the depth direction in accordance with the user's viewing location. To be more specific, it is determined whether the user's viewing location is in the normal view area or the reverse view area. When the user's viewing location has shifted from the normal view area to the reverse view area, the parallax reduced animation display is executed. In doing so, the image may be transitioned until the parallax reduced animation display is executed without parallax or the image may be transitioned until the stereoscopic display with the depth adjusted for that user is executed.

According to the above-mentioned variation, the boundary between the normal view area and the reverse view area can be linked by executing the parallax reduced animation (or fade animation) at the timing described above. This configuration mitigates the uncomfortableness of eyes that occurs at the boundary between the normal view area and the reverse view area.

According to the embodiment and variation described above, in response to the user's attention to a particular object, this object can be animation-displayed in the depth direction, thereby widening the range of the projecting amount and retracting amount of the object. In addition, the above-mentioned novel configuration facilitates the browsing by the user, the fine adjustment of the degrees of projection and retraction in stereoscopic display need not be done for each screen and content, thereby facilitating the screen design of the graphical user interface (GUI) of stereoscopic display.

In the embodiment and the variation described above, the operations of component blocks are related with each other and, by considering the interrelations thereof, the component blocks can be replaced by a sequence of operations and a sequence of processing. Consequently, the embodiments of the information processing apparatus can be provided as embodiments of an information processing method and embodiments of programs for realizing the functions of the information processing apparatus by use of a computer.

While preferred embodiments of the present disclosure have been described with reference to the accompanying drawings, such description is for illustrative purpose only, and it is to be understood that changes and variations may be made without departing from the scope of the following claims.

For example, in the embodiment described above, an object is animation-displayed in the depth direction in accordance with the user's attention by assuming that the number of users who view is one; however, the present disclosure is not limited to this example. For example, if there are two or more viewing users, the acquisition block may acquire the detection results associated with users' attentions for each user. In addition, the display control block may animation-display objects in the depth direction in response to the users' attentions for each user on the basis of the acquired detection results. It should be noted that, in this example, control is executed such that the positional relation in the depth direction of two or more objects displayed on the screen is maintained.

It is also practicable, when a user intentionally gestures, to execute animation display accordingly. In doing so, the acquisition block acquires an operation done by the user, and the display control block readjusts the parallax amount in accordance with the acquired user operation and animation-displays an object on the basis of the readjusted parallax amount. According to this configuration, if the user intentionally gestures during the execution of the parallax reduced animation display, for example, the display method is switched to the parallax enlarged animation display in accordance with the gesture, thereby displaying the object as if the object returns. In addition, animation display can be started for the first time by an operation done by the user. Animation display can also be terminated by an operation done by the user.

The present disclosure contains subject matter related to that disclosed in Japanese Priority Patent Application JP 2010-284583 filed in the Japan Patent Office on December 21, 2010.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus (100) comprising:
an acquisition block (130) configured to acquire a detection result associated with attention of a user to an object displayed on a display screen capable of stereoscopically displaying an image; and
a display control block (150) configured to gradually change the projection or retracting amount of said object in the direction of depth in accordance with said user attention on the basis of said acquired detection result, wherein the speed of the change of the retracting amount executed behind the display screen is greater than the speed of the change of projection amount executed in front of the display screen, wherein the speed of the change of the projection amount and the retracting amount is controlled by a linear adjustment of a parallax amount of the object, and wherein the time from starting the change of the projection or retracting amount until the end of the change of the projection or retracting amount is the same for the change of the projection amount and for the change of the retracting amount.

2. The information processing apparatus according to claim 1, wherein, in accordance with departure of said user's attention from said object, said display control block gradually changes the projection or retracting amount of said object such that the absolute value of a depth amount of said object is reduced.

3. The information processing apparatus according to claim 2, wherein, after passing of a first predetermined time after departure of said user's attention from said object, said display control block starts said gradual change of the projection or retracting amount.

4. The information processing apparatus according to claim 2, wherein, for a second predetermined time after departure of said user's attention from said object, said display control block gradually changes the projection or retracting amount of said object.

5. The information processing apparatus according to claim 4, wherein, after passing of said second predetermined time after departure of said user's attention from said object, the display control block displays said object in a state in which there is no parallax.

6. The information processing apparatus according to claim 1, wherein, in accordance with directing of said user's attention to said object, said display control block gradually changes the projection or retracting amount of said object such that an absolute value of the depth amount of said object is increased.

7. The information processing apparatus according to claim 1, wherein said detection result associated with said user's attention includes a detection result relating to presence or absence of a user's face.

8. The information processing apparatus according to claim 1, wherein said detection result associated with said user's attention includes presence or absence of a user's face, user's face direction, distance between said display screen and user's face, two or more user's eyes, infrared light reflected from user's eyes, user's operation of apparatus, eye contact, view line movement, view line direction, presence or absence of user's body, direction of user's body part, user's gesture, and user's brain signal.

9. An information processing method comprising:
acquiring a detection result associated with a user attention to an object displayed on a display screen capable of stereoscopically displaying an image; and
gradually changing the projection or retracting amount of said object in the direction of depth in accordance with said user attention on the basis of said acquired detection result, wherein the speed of the change of the retracting amount executed behind the display screen is greater than the speed of the change of projection amount executed in front of the display screen, wherein the speed of the change of the projection amount and the retracting amount is controlled by a linear adjustment of a parallax amount of the object, and wherein the time from starting the change of the projection or retracting amount until the end of the change of the projection or retracting amount is the same for the change of the projection amount and for the change of the retracting amount.

10. A program which, when the program is executed by a computer, causes the computer to execute:
processing of acquiring a detection result associated with a user attention to an object displayed on a display screen capable of stereoscopically displaying an image; and
processing of gradually changing the projection or retracting amount of said object in the direction of depth in accordance with said user attention on the basis of said acquired detection result, wherein the speed of the change of the retracting amount executed behind the display screen is greater than the speed of the change of projection amount executed in front of the display screen, wherein the speed of the change of the projection amount and the retracting amount is controlled by a linear adjustment of a parallax amount of the object, and wherein the time from starting the change of the projection or retracting amount until the end of the change of the projection or retracting amount is the same for the change of the projection amount and for the change of the retracting amount.

## Patentansprüche

1. Informationsverarbeitungsvorrichtung (100), umfassend:
einen Erfassungsblock (130), konfiguriert zum Erfassen eines Detektionsergebnisses, assoziiert mit einer Aufmerksamkeit eines Benutzers gegenüber einem auf einem Anzeigebildschirm, der imstande ist, ein Bild stereoskopisch anzuzeigen, angezeigten Objekt; und
einen Anzeigesteuerblock (150), konfiguriert zum graduellen Verändern des Projektions- oder Zurückziehungsbetrags des Objekts in der Tiefenrichtung in Übereinstimmung mit der Benutzeraufmerksamkeit auf der Basis des erfassten Detektionsergebnisses, wobei die Veränderungsgeschwindigkeit des Zurückziehungsbetrags, ausgeführt hinter dem Anzeigebildschirm, größer ist als die Veränderungsgeschwindigkeit des Projektionsbetrags, ausgeführt vor dem Anzeigebildschirm, wobei die Veränderungsgeschwindigkeit des Projektionsbetrags und des Zurückziehungsbetrags durch lineare Anpassung eines Parallaxenbetrags des Objekts gesteuert wird und wobei die Zeit vom Beginn der Veränderung des Projektions- oder Zurückziehungsbetrags bis zum Ende der Veränderung des Projektions- oder Zurückziehungsbetrags für die Veränderung des Projektionsbetrags und für die Veränderung des Zurückziehungsbetrags die gleiche ist.

2. Informationsverarbeitungsvorrichtung nach Anspruch 1, wobei, in Übereinstimmung mit der Wegnahme der Aufmerksamkeit des Benutzers von dem Objekt, der Anzeigesteuerblock den Projektions- oder Zurückziehungsbetrag des Objekts graduell derart verändert, dass der Absolutwert eines Tiefenbetrags des Objekts reduziert wird.

3. Informationsverarbeitungsvorrichtung nach Anspruch 2, wobei, nach Verstreichen einer ersten im Voraus bestimmten Zeit nach der Wegnahme der Aufmerksamkeit des Benutzers von dem Objekt, der Anzeigesteuerblock die graduelle Veränderung des Projektions- oder Zurückziehungsbetrags beginnt.

4. Informationsverarbeitungsvorrichtung nach Anspruch 2, wobei, für eine zweite im Voraus bestimmten Zeit nach der Wegnahme der Aufmerksamkeit des Benutzers von dem Objekt, der Anzeigesteuerblock den Projektions- oder Zurückziehungsbetrag des Objekts graduell verändert.

5. Informationsverarbeitungsvorrichtung nach Anspruch 4, wobei, nach Verstreichen der zweiten im Voraus bestimmten Zeit nach der Wegnahme der Aufmerksamkeit des Benutzers von dem Objekt, der Anzeigesteuerblock das Objekt in einem Zustand anzeigt, in dem keine Parallaxe vorhanden ist.

6. Informationsverarbeitungsvorrichtung nach Anspruch 1, wobei, in Übereinstimmung mit Leiten der Aufmerksamkeit des Benutzers auf das Objekt, der Anzeigesteuerblock den Projektions- oder Zurückziehungsbetrag des Objekts graduell derart verändert, dass ein Absolutwert des Tiefenbetrags des Objekts erhöht wird.

7. Informationsverarbeitungsvorrichtung nach Anspruch 1, wobei das mit der Aufmerksamkeit des Benutzers assoziierte Detektionsergebnis ein Detektionsergebnis enthält, das zum Vorhandensein oder Nichtvorhandensein eines Gesichts eines Benutzers in Beziehung steht.

8. Informationsverarbeitungsvorrichtung nach Anspruch 1, wobei das mit der Aufmerksamkeit des Benutzers assoziierte Detektionsergebnis das Vorhandenen oder Nichtvorhandensein eines Benutzergesichts, eine Richtung eines Benutzergesichts, eine Distanz zwischen dem Anzeigebildschirm und einem Benutzergesicht, zwei oder mehr Benutzeraugen, von Benutzeraugen reflektiertes Infrarotlicht, Benutzerbedienung der Vorrichtung, Augenkontakt, Bewegung der Blicklinie, Richtung der Blicklinie, Vorhandenen oder Nichtvorhandensein eines Benutzerkörpers, Richtung von Benutzerkörperteilen, Benutzergesten und Benutzergehirnsignale enthält.

9. Informationsverarbeitungsverfahren, umfassend:
Erfassen eines Detektionsergebnisses, assoziiert mit einer Benutzeraufmerksamkeit gegenüber einem auf einem Anzeigebildschirm, der imstande ist, ein Bild stereoskopisch anzuzeigen, angezeigten Objekt; und
graduelles Verändern des Projektions- oder Zurückziehungsbetrags des Objekts in der Tiefenrichtung in Übereinstimmung mit der Benutzeraufmerksamkeit auf der Basis des erfassten Detektionsergebnisses, wobei die Veränderungsgeschwindigkeit des Zurückziehungsbetrags, ausgeführt hinter dem Anzeigebildschirm, größer ist als die Veränderungsgeschwindigkeit des Projektionsbetrags, ausgeführt vor dem Anzeigebildschirm, wobei die Veränderungsgeschwindigkeit des Projektionsbetrags und des Zurückziehungsbetrags durch lineare Anpassung eines Parallaxenbetrags des Objekts gesteuert wird und wobei die Zeit vom Beginn der Veränderung des Projektions- oder Zurückziehungsbetrags bis zum Ende der Veränderung des Projektions- oder Zurückziehungsbetrags für die Veränderung des Projektionsbetrags und für die Veränderung des Zurückziehungsbetrags die gleiche ist.

10. Programm, das, wenn das Programm durch einen Computer ausgeführt wird, bewirkt, dass der Computer Folgendes ausführt:
Verarbeiten des Erfassens eines Detektionsergebnisses, assoziiert mit einer Aufmerksamkeit eines Benutzers gegenüber einem auf einem Anzeigebildschirm, der imstande ist, ein Bild stereoskopisch anzuzeigen, angezeigten Objekt; und
Verarbeiten des graduellen Veränderns des Projektions- oder Zurückziehungsbetrags des Objekts in der Tiefenrichtung in Übereinstimmung mit der Benutzeraufmerksamkeit auf der Basis des erfassten Detektionsergebnisses, wobei die Veränderungsgeschwindigkeit des Zurückziehungsbetrags, ausgeführt hinter dem Anzeigebildschirm, größer ist als die Veränderungsgeschwindigkeit des Projektionsbetrags, ausgeführt vor dem Anzeigebildschirm, wobei die Veränderungsgeschwindigkeit des Projektionsbetrags und des Zurückziehungsbetrags durch lineare Anpassung eines Parallaxenbetrags des Objekts gesteuert wird und wobei die Zeit vom Beginn der Veränderung des Projektions- oder Zurückziehungsbetrags bis zum Ende der Veränderung des Projektions- oder Zurückziehungsbetrags für die Veränderung des Projektionsbetrags und für die Veränderung des Zurückziehungsbetrags die gleiche ist.

## Revendications

1. Appareil de traitement d'informations (100), comprenant :
un bloc d'acquisition (130) configuré pour acquérir un résultat de détection associé à l'attention portée par un utilisateur à un objet affiché sur un écran d'affichage apte à afficher une image de manière stéréoscopique ; et
un bloc de commande d'affichage (150) configuré pour faire progressivement varier la quantité d'avancée ou de retrait dudit objet dans la direction de profondeur en fonction de ladite attention portée par l'utilisateur sur la base dudit résultat de détection acquis, la vitesse de la variation de la quantité de retrait exécutée derrière l'écran d'affichage étant supérieure à la vitesse de la variation de la quantité d'avancée exécutée devant l'écran d'affichage, la vitesse de la variation de la quantité d'avancée et de la quantité de retrait étant commandée par un réglage linéaire d'une quantité de parallaxe de l'objet, et le temps entre le début de la variation de la quantité d'avancée ou de retrait et la fin de la variation de la quantité d'avancée ou de retrait étant le même pour la variation de la quantité d'avancée et pour la variation de la quantité de retrait.

2. Appareil de traitement d'informations selon la revendication 1, dans lequel, en fonction d'un écart de ladite attention portée par l'utilisateur audit objet, ledit bloc de commande d'affichage fait progressivement varier la quantité d'avancée ou de retrait dudit objet de façon à réduire la valeur absolue d'une quantité de profondeur dudit objet.

3. Appareil de traitement d'informations selon la revendication 2, dans lequel, suite à l'écoulement d'un premier temps prédéterminé après l'écart de ladite attention portée par l'utilisateur audit objet, ledit bloc de commande d'affichage débute ladite variation progressive de la quantité d'avancée ou de retrait.

4. Appareil de traitement d'informations selon la revendication 2, dans lequel, pendant un deuxième temps prédéterminé après l'écart de ladite attention portée par l'utilisateur audit objet, ledit bloc de commande d'affichage fait progressivement varier la quantité d'avancée ou de retrait dudit objet.

5. Appareil de traitement d'informations selon la revendication 4, dans lequel, suite à l'écoulement dudit deuxième temps prédéterminé après l'écart de ladite attention portée par l'utilisateur audit objet, le bloc de commande d'affichage affiche ledit objet dans un état sans parallaxe.

6. Appareil de traitement d'informations selon la revendication 1, dans lequel, en fonction de la direction de ladite attention portée par l'utilisateur audit objet, ledit bloc de commande d'affichage fait progressivement varier la quantité d'avancée ou de retrait dudit objet de façon à accroître une valeur absolue de la quantité de profondeur dudit objet.

7. Appareil de traitement d'informations selon la revendication 1, dans lequel ledit résultat de détection associé à ladite attention portée par l'utilisateur comporte un résultat de détection lié à la présence ou à l'absence du visage d'un utilisateur.

8. Appareil de traitement d'informations selon la revendication 1, dans lequel ledit résultat de détection associé à ladite attention portée par l'utilisateur comporte la présence ou l'absence du visage d'un utilisateur, la direction du visage de l'utilisateur, la distance entre ledit écran d'affichage et le visage de l'utilisateur, deux yeux de l'utilisateur ou plus, de la lumière infrarouge reflétée par les yeux de l'utilisateur, une utilisation de l'appareil par l'utilisateur, un contact avec les yeux, un mouvement de la ligne de vision, une direction de la ligne de vision, la présence ou l'absence du corps de l'utilisateur, la direction d'une partie du corps de l'utilisateur, un geste de l'utilisateur et un signal cérébral de l'utilisateur.

9. Procédé de traitement d'informations, comprenant :
l'acquisition d'un résultat de détection associé à l'attention portée par un utilisateur à un objet affiché sur un écran d'affichage apte à afficher une image de manière stéréoscopique ; et
la variation progressive de la quantité d'avancée ou de retrait dudit objet dans la direction de profondeur en fonction de ladite attention portée par l'utilisateur sur la base dudit résultat de détection acquis, la vitesse de la variation de la quantité de retrait exécutée derrière l'écran d'affichage étant supérieure à la vitesse de la variation de la quantité d'avancée exécutée devant l'écran d'affichage, la vitesse de la variation de la quantité d'avancée et de la quantité de retrait étant commandée par un réglage linéaire d'une quantité de parallaxe de l'objet, et le temps entre le début de la variation de la quantité d'avancée ou de retrait et la fin de la variation de la quantité d'avancée ou de retrait étant le même pour la variation de la quantité d'avancée et pour la variation de la quantité de retrait.

10. Programme qui, une fois exécuté par un ordinateur, amène l'ordinateur à exécuter :
un traitement d'acquisition d'un résultat de détection associé à l'attention portée par un utilisateur à un objet affiché sur un écran d'affichage apte à afficher une image de manière stéréoscopique ; et
un traitement de variation progressive de la quantité d'avancée ou de retrait dudit objet dans la direction de profondeur en fonction de ladite attention portée par l'utilisateur sur la base dudit résultat de détection acquis, la vitesse de la variation de la quantité de retrait exécutée derrière l'écran d'affichage étant supérieure à la vitesse de la variation de la quantité d'avancée exécutée devant l'écran d'affichage, la vitesse de la variation de la quantité d'avancée et de la quantité de retrait étant commandée par un réglage linéaire d'une quantité de parallaxe de l'objet, et le temps entre le début de la variation de la quantité d'avancée ou de retrait et la fin de la variation de la quantité d'avancée ou de retrait étant le même pour la variation de la quantité d'avancée et pour la variation de la quantité de retrait.
